# EUROPÄISCHE PATENTANMELDUNG

(11) **EP 1 538 326 A1**
(43) Veröffentlichungstag der Anmeldung: **08.06.2005**
(21) Anmeldenummer: 04025861.8
(22) Anmeldetag: 30.10.2004
(51) Int. Cl.: F02F 1/24, F02F 11/00, F16L 23/04

(54) **Anordnung zum dichten und lösbaren Verbinden zweier Werkstücke**

(30) Priorität: 02.12.2003 AT 19242003
(71) Anmelder: GE Jenbacher GmbH & Co. OHG, 6200 Jenbach (AT)
(72) Erfinder: Kathrein, Gerhard, 6200 Jenbach (AT)
(74) Vertreter: Torggler, Paul N.

(57) **Zusammenfassung**

Anordnung zum dichten und lösbaren Verbinden eines ersten Werkstücks (1) mit einem zweiten Werkstück (2), insbesondere von zwei Flanschen, wobei jedes Werkstück (1, 2) zumindest eine Dichtfläche (7a, 7b) aufweist, wobei das erste Werkstück (1) zumindest einen Führungszapfen (5) aufweist, durch den die Dichtflächen (7a, 7b) der beiden Werkstücke (1, 2) bei der Montage über mindestens eine Schrägfläche (8) zusammenpressbar sind.

## Beschreibung

Die vorliegende Erfindung betrifft eine Anordnung zum dichten und lösbaren Verbinden eines ersten Werkstücks mit einem zweiten Werkstück, insbesondere von zwei Flanschen, wobei jedes Werkstück zumindest eine Dichtfläche aufweist, sowie ein Verfahren zum dichten und lösbaren Verbinden derselben.

Der Stand der Technik offenbart eine Vielzahl an Anordnungen, die zum Verbinden von zwei Werkstücken vorgesehen sind. Darin werden beispielsweise Lösungen für Flanschverbindungen beschrieben, bei denen zwischen den zu verbindenden Teilen ein Dichtmittel angeordnet ist, welches üblicherweise derart verpresst wird, bis eine entsprechende Dichtfunktion erreicht wird. Hierbei kann es jedoch bei der Montage vorkommen, dass durch das enge Anliegen der beiden Teile bzw. durch das relative Verschieben der Teile zueinander das Dichtmittel an einer Kante abgeschert wird. Andere Varianten gemäß dem Stand der Technik sehen Lösungen vor, in denen nachteiligerweise ein verhältnismäßig großer zusätzlicher Bauraum benötigt wird, der für das Zusammenfügen der beiden Teile notwendig ist. Dieser Nachteil behindert einen kompakten Aufbau von maschinenbautechnischen Anlagen. Ein weiteres wichtiges Kriterium ist die exakte Positionierung der Werkstücke zueinander, da bei ungenauer Lage derselben durch verbleibende Luftspalten die Erfordernisse einer ausreichenden Dichtwirkung nicht erfüllt werden können. Diese Kriterien erfüllt der Stand der Technik zum Teil nur mit unverhältnismäßig großem Aufwand.

Aufgabe der gegenständlichen Erfindung ist es daher, eine kostengünstige und einfache Lösung zur dichten und lösbaren Verbindung zweier Werkstücke der eingangs erwähnten Art vorzuschlagen, die die oben genannten Nachteile des Standes der Technik vermeidet.

Dies wird erfindungsgemäß dadurch erreicht, dass das erste Werkstück zumindest einen Führungszapfen aufweist, durch den die Dichtflächen der beiden Werkstücke bei der Montage über mindestens eine Schrägfläche zusammenpressbar sind.

Durch die Anbringung oder Ausbildung zumindest eines derartigen Führungszapfens werden beim Montagevorgang durch das Entlanggleiten des zweiten Werkstücks an der vorgesehenen Schrägfläche die beiden Dichtflächen zusammengepresst, bis eine ausreichende Dichtfunktion erreicht wird. Vorteilhafterweise ist die Schrägfläche am Führungszapfen ausgebildet, wobei vorzugsweise ein zylindrischer Führungszapfen eine konische Spitze aufweist. Bei der Montage ist nun günstigerweise vorgesehen, dass der Führungszapfen in eine - vorzugsweise als Sackbohrung - ausgebildete Aussparung oder an einer Kante des zweiten Werkstücks eingreift bzw. angreift. Durch das Ein- bzw. Angreifen einer Ecke bzw. Kante des zweiten Werkstücks an der vorgesehenen Schrägfläche des Führungszapfens werden die beiden Werkstücke zusammengeschoben, sodass daher auch die Dichtflächen der beiden Werkstücke aneinandergepresst werden. Der zylindrische Abschnitt des Führungszapfens dient dazu, die beiden Werkstücke nach dem Pressvorgang in dieser dichtenden Position zu halten. Gemäß einer vorteilhaften Ausführungsform der Erfindung kann auch vorgesehen sein, dass die Schrägfläche an der Aussparung oder an der Kante ausgebildet ist.

Gemäß einer bevorzugten Ausführungsform der vorliegenden Erfindung ist nun vorgesehen, dass eine Führungseinrichtung des ersten Werkstücks parallel zur Dichtfläche angeordnet ist, wobei diese vorteilhaft als ein zylindrischer Stab ausgeführt ist. Durch diesen - günstigerweise von der Dichtfläche beabstandeten - Stab kann das zweite Werkstück zunächst in axialer Richtung des Stabes verschoben und exakt positioniert werden, ohne dass das Dichtmittel durch eine eng anliegende Kante des ersten Werkstücks nachteiligerweise abgeschert wird. Das zweite Werkstück ist also günstigerweise beabstandet zur Dichtfläche des ersten Werkstücks führbar und erst dann durch Entlanggleiten an der zumindest einen Schrägfläche an die Dichtfläche des ersten Werkstücks anpressbar. Hierbei ist vorteilhafterweise vorgesehen, dass zwischen der Führungseinrichtung und zweitem Werkstück ein seitliches Spiel angeordnet ist, wodurch der Abstand zwischen den beiden Dichtflächen ausgeglichen wird und dadurch die Dichtflächen bzw. die Dichtung optimal verpresst werden können.

Das erfindungsgemäße Verfahren ist dadurch gekennzeichnet, dass die zwei Werkstücke beabstandet relativ zueinander bewegt werden und erst in der letzten Montagephase über mindestens eine Schrägfläche quer zur Bewegungsrichtung zusammengepresst werden.

Weitere Einzelheiten und Vorteile der vorliegenden Erfindung werden anhand der Figurenbeschreibung unter Bezugnahme auf die Zeichnungen im Folgenden näher erläutert. Darin zeigen:
- Fig. 1 a, 1 b: zwei Varianten einer dichten Bauteilverbindung gemäß dem Stand der Technik,
- Fig. 2a: eine schematische Draufsicht der erfindungsgemäßen Anordnung anhand eines Beispiels einer Zylinderkopfmontage,
- Fig. 2b: ein schematischer Schnitt entlang der Achse A-A aus Fig. 2a in einem ersten Montageschritt,
- Fig. 2c: eine schematische Darstellung des Details C aus Fig. 2b,
- Fig. 2d Fig. 3a, 3b, 3c, 3d: eine schematische Darstellung des Details B aus Fig. 2b,
sowie
- Fig. 4a, 4b, 4c, 4d: analoge Darstellungen aus Fig. 2a bis 2d in nachfolgenden Montageschritten, und
- Fig. 5a, 5b: eine Variante der Erfindung anhand einer Rohrverbindung.

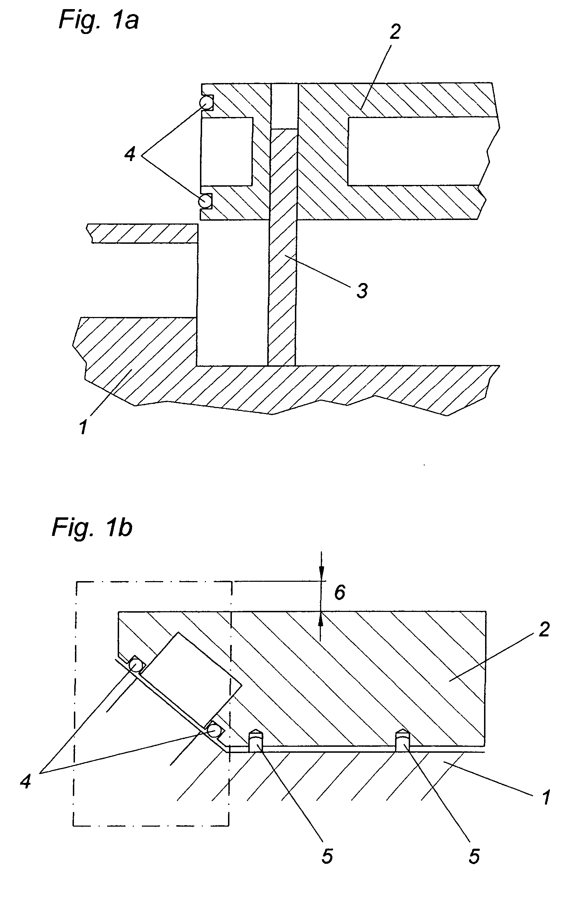

Fig. 1a zeigt eine Lösung zum Verbinden zweier Bauteile gemäß dem Stand der Technik. Ein erstes Werkstück 1 sollte mit einem zweiten Werkstück 2 dichtend verbunden werden. Hierfür ist ein Führungselement 3 vorgesehen, welches fest mit dem ersten Werkstück 1 verbunden ist. Das zweite Werkstück 2 wird auf diesem Führungselement 3 axial verschoben, wodurch nachteiligerweise aufgrund des engen Beieinanderliegens der beiden Bauteile 1, 2 die Dichtmittel 4 abgeschert werden können. Ein weiterer Nachteil ergibt sich aus der Verwendung von übermäßig langen Führungselementen 3, die zudem sehr massiv ausgeführt werden müssen. Darüber hinaus ist ein verhältnismäßig großer Einbauraum notwendig, der eine kompakte Bauweise der Anordnung vereitelt.

Fig. 1 b zeigt eine weitere Lösung gemäß dem Stand der Technik. Das Bauteil 2 wird von oben her auf die Bolzen 5 geschoben, die im eingeschobenen Zustand des Bauteils 2 ein seitliches Verrutschen desselben verhindern. Auch hier ist der Nachteil des großen Bauraumes 6 ersichtlich, der zumindest etwas mehr als die Bolzenhöhe betragen muss.

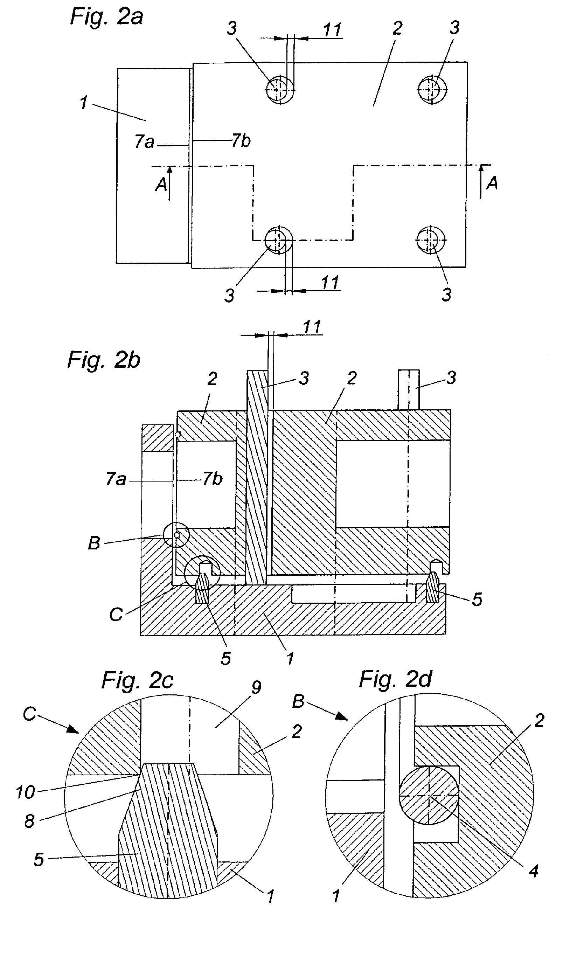

Fig. 2a bis Fig. 2d zeigen ein schematisch dargestelltes Ausführungsbeispiel der erfindungsgemäßen Anordnung zum dichten und lösbaren Verbinden zweier Werkstücke 1, 2 anhand der Montage eines Zylinderkopfes in einem ersten Montageschritt. Fig. 2a zeigt eine Draufsicht der Anordnung mit erstem Werkstück 1, zweitem zu verbindenden Werkstück 2 sowie eine Führungseinrichtung 3. Fig. 2b zeigt eine schematische Schnittdarstellung entlang der Achse A-A aus Fig. 2a, in der die Funktion der Anordnung verständlich wird. Das erste Werkstück 1 weist eine Führungseinrichtung 3 - hier als zylindrischer Stab ausgeführt - auf, die fest mit dem ersten Werkstück 1 verbunden ist, auf der das zweite Werkstück 2 axial verschoben wird. Die beiden Dichtflächen 7a, 7b der Werkstücke 1, 2 sind im Wesentlichen eben ausgebildet. Günstigerweise weist zumindest ein Werkstück 1, 2 eine Dichtung 4 auf, die vor der Montage über die Dichtfläche 7b vorsteht, wie im Detail B in Fig. 2d ersichtlich.
Erfindungsgemäß ist nun vorgesehen, dass das erste Werkstück 1 zumindest einen Führungszapfen 5 aufweist, der parallel zur Dichtfläche 7a des ersten Werkstücks 1 angeordnet ist. Dieser zylindrische Führungszapfen 5 weist eine konische Spitze mit einer Schrägfläche 8 auf, der bei der Montage in eine vorgesehene Aussparung 9 eingreift, bzw. an der Kante 10 angreift. Die Schrägfläche 8 ist günstigerweise zwischen 10° und 45° geneigt. Die Grundidee der Erfindung sieht vorteilhafterweise vor, dass das zweite Werkstück 2 zuerst beabstandet zur Dichtfläche 7a des ersten Werkstücks 1 über die Führungseinrichtung 3 axial führbar ist (Y-Bewegungskomponente) und erst dann durch Entlanggleiten an der Schrägfläche 8 an die Dichtfläche 7a des ersten Werkstücks 1 anpressbar ist (X- und Y-Bewegungskomponente). Damit ein Zusammenschieben der beiden Werkstücke 1, 2 möglich wird, ist vorteilhafterweise zwischen Führungseinrichtung 3 und zweitem Werkstück 2 ein seitliches Spiel 11 vorgesehen, welches in dem gezeigten Ausführungsbeispiel durch eine das Werkstück 2 durchsetzende Durchgangsbohrung realisiert ist, deren Durchmesser größer als jener der Führungseinrichtung 3 ist.

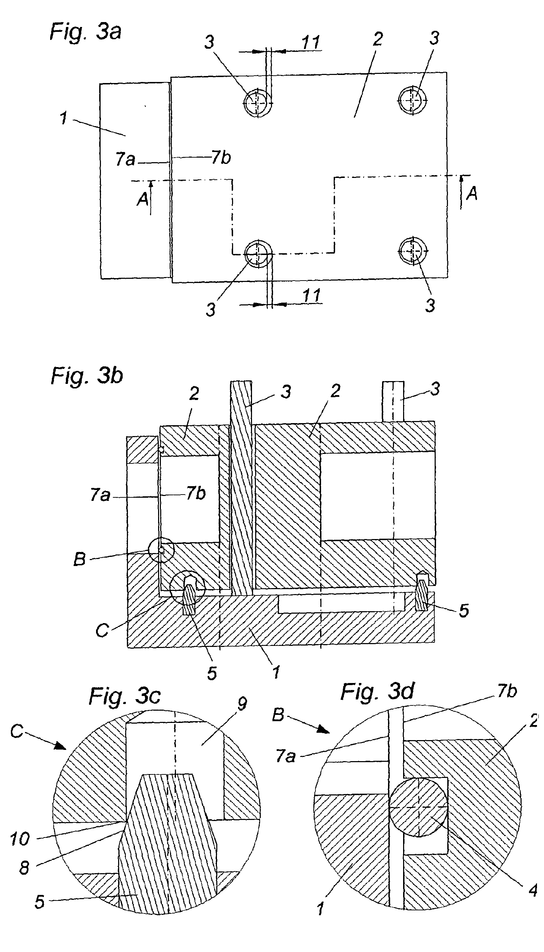

Fig. 3a bis Fig. 3d zeigen die Anordnung in einem nachfolgenden Montageschritt analog der Darstellungen aus Fig. 2a bis 2d. Das Werkstück 2 gleitet an der Schrägfläche 8 aufgrund der Schwerkraft immer weiter entlang, wodurch die Dichtung 4 des zweiten Werkstücks 2 in Kontakt mit dem ersten Werkstück 1 tritt. (Fig. 3d)

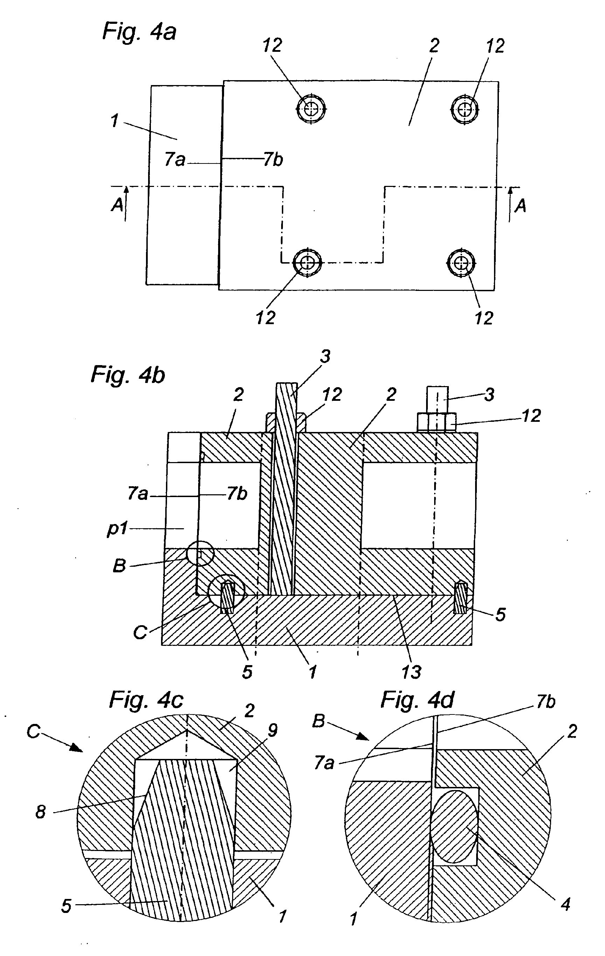

Fig. 4a bis Fig. 4d zeigten die erfindungsgemäße Anordnung in einem montierten Zustand. In der gezeigten Fig. 4d ist die Dichtung 4 soweit verpresst, dass eine Dichtwirkung zwischen Druck p1 und Umgebungsdruck gegeben ist. Auch die Zylinderkopfdichtung 13 in Fig. 4b wird dabei stark verpresst. Vorteilhaft ist nun vorgesehen, dass an der Führungseinrichtung 3 zumindest ein, vorzugsweise metrisches, Gewinde ausgebildet ist. Damit kann man die Führungseinrichtung 3 günstigerweise durch eine Spannvorrichtung, vorzugsweise eine Schraubenmutter 12, mit axial wirkender Kraft beaufschlagen und das Werkstück 2 mit dem Werkstück 1 in der verpressten Position fixieren.

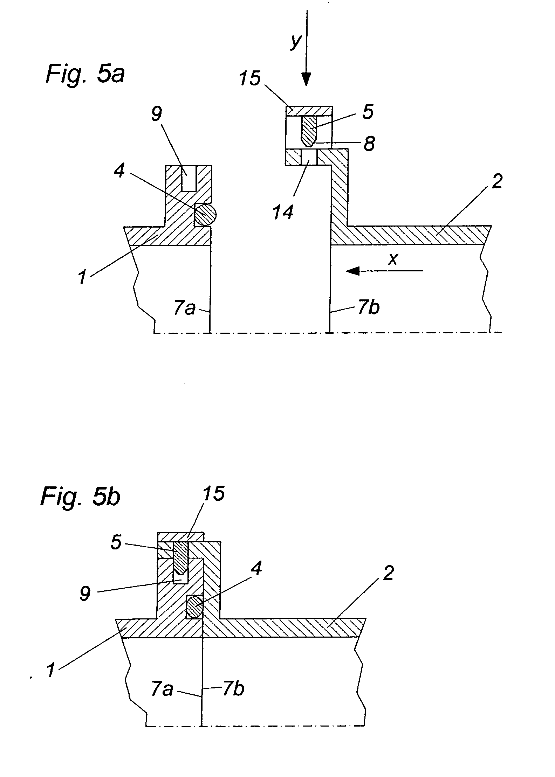

Fig. 5a bzw. Fig. 5b zeigen eine Variante der Erfindung anhand einer Verbindung zweier Rohre 1, 2 in einem demontierten bzw. montierten Zustand. Die Bauteile sind jeweils spiegelbildlich um die Symmetrieachse angeordnet, das bedeutet, dass jeweils zwei Führungszapfen 5, zwei Aussparungen 9 sowie zwei Bohrungen 14 vorhanden sind. Zur besseren Veranschaulichung ist nur eine Verbindungsanordnung dargestellt. Die Rohre 1, 2 werden in Richtung X zusammengeschoben, bis das Rohr 2 an der Dichtung 4 ansteht, die im unverpressten Zustand über die Dichtfläche 7a vorsteht. Anschließend wird das Spannelement 15 zusammengezogen und die konischen Führungszapfen 5 dringen in Richtung Y über die Bohrung 14 in die Aussparungen 9 ein. Der konische Führungszapfen 5 dringt in die als Sackbohrung ausgebildete Aussparung 9 ein bzw. greift mit der Schrägfläche 8 an der Kante der Aussparung 9 an und bewirkt so ein Zusammendrücken der beiden Dichtflächen 7a, 7b. Die Dichtung 4 wird dabei soweit verpresst, bis die Dichtfunktion erreicht ist.

Es versteht sich von selbst, dass die erfindungsgemäße Anordnung zum dichten und lösbaren Verbinden zweier Werkstücke nicht auf die in den Figuren dargestellten Ausführungsbeispiele beschränkt ist noch durch diese eingeschränkt werden soll. Beispielsweise ist auch eine umgekehrte kinematische Lösung der Führungszapfen denkbar, die eine Aussparung am ersten Werkstück sowie die Führungszapfen am zweiten Werkstück vorsieht.

## Patentansprüche

1. Anordnung zum dichten und lösbaren Verbinden eines ersten Werkstücks mit einem zweiten Werkstück, insbesondere von zwei Flanschen, wobei jedes Werkstück zumindest eine Dichtfläche aufweist, **dadurch gekennzeichnet, dass** das erste Werkstück (1) zumindest einen Führungszapfen (5) aufweist, durch den die Dichtflächen (7a, 7b) der beiden Werkstücke (1, 2) bei der Montage über mindestens eine Schrägfläche (8) zusammenpressbar sind.

2. Anordnung nach Anspruch 1, **dadurch gekennzeichnet, dass** die Schrägfläche (8) am Führungszapfen (5) ausgebildet ist, wobei vorzugsweise ein zylindrischer Führungszapfen (5) eine konische Spitze aufweist.

3. Anordnung nach Anspruch 1 oder 2, **dadurch gekennzeichnet, dass** der Führungszapfen (5) bei der Montage in eine - vorzugsweise als Sackbohrung - ausgebildete Aussparung (9) oder an einer Kante (10) des zweiten Werkstücks (2) eingreift bzw. angreift.

4. Anordnung nach Anspruch 3, **dadurch gekennzeichnet, dass** die Schrägfläche (8) an der Aussparung (9) oder an der Kante (10) ausgebildet ist.

5. Anordnung nach einem der Ansprüche 1 bis 4, **dadurch gekennzeichnet, dass** die Dichtflächen (7a, 7b) im Wesentlichen eben ausgebildet sind.

6. Anordnung nach einem der Ansprüche 1 bis 5, **dadurch gekennzeichnet, dass** der zumindest eine Führungszapfen (5) parallel zur Dichtfläche (7a) des ersten Werkstücks (1) angeordnet ist.

7. Anordnung nach einem der Ansprüche 1 bis 6, **dadurch gekennzeichnet, dass** die Schrägfläche (8), vorzugsweise zwischen 10° und 45°, geneigt ist.

8. Anordnung nach einem der Ansprüche 1 bis 7, **dadurch gekennzeichnet, dass** eine Führungseinrichtung (3) des ersten Werkstücks (1) parallel zur Dichtfläche (7a) angeordnet ist.

9. Anordnung nach einem der Ansprüche 1 bis 8, **dadurch gekennzeichnet, dass** die Führungseinrichtung (3) des ersten Werkstücks (1) ein, vorzugsweise zylindrischer, Stab ist.

10. Anordnung nach einem der Ansprüche 1 bis 9, **dadurch gekennzeichnet, dass** zwischen Führungseinrichtung (3) und zweitem Werkstück (2) ein seitliches Spiel (11 ) vorgesehen ist.

11. Anordnung nach einem der Ansprüche 1 bis 10, **dadurch gekennzeichnet, dass** die Führungseinrichtung (3) fest mit dem ersten Werkstück (1) verbunden ist.

12. Anordnung nach einem der Ansprüche 1 bis 11, **dadurch gekennzeichnet, dass** zumindest ein Werkstück (1, 2) eine Dichtung (4) aufweist.

13. Anordnung nach Anspruch 12, **dadurch gekennzeichnet, dass** diese Dichtung (4) vor der Montage über die Dichtfläche (7a, 7b) vorsteht.

14. Anordnung nach einem der Ansprüche 1 bis 13, **dadurch gekennzeichnet, dass** das zweite Werkstück (2) zuerst beabstandet zur Dichtfläche (7a) des ersten Werkstücks (1) führbar ist und erst dann durch Entlanggleiten an der zumindest einen Schrägfläche (8) an die Dichtfläche (7a) des ersten Werkstücks (1) anpressbar ist.

15. Anordnung nach einem der Ansprüche 1 bis 14, **dadurch gekennzeichnet, dass** an der Führungseinrichtung (3) zumindest teilweise ein, vorzugsweise metrisches, Gewinde ausgebildet ist.

16. Anordnung nach einem der Ansprüche 1 bis 15, **dadurch gekennzeichnet, dass** die Führungseinrichtung (3) durch eine Spannvorrichtung, vorzugsweise eine Schraubenmutter (12), mit axial wirkender Kraft beaufschlagbar ist.

17. Verfahren zum dichten und lösbaren Verbinden eines ersten Werkstücks mit einem zweiten Werkstück, insbesondere nach einem der Ansprüche 1 bis 16, **dadurch gekennzeichnet, dass** die zwei Werkstücke (1, 2) beabstandet relativ zueinander bewegt werden und erst in der letzten Montagephase über mindestens eine Schrägfläche (8) quer zur Bewegungsrichtung zusammengepresst werden.
